# EUROPEAN PATENT APPLICATION

(11) **EP 2 869 660 A1**
(43) Date of publication of application: **06.05.2015**
(21) Application number: 12880000.0
(22) Date of filing: 30.06.2012
(51) Int. Cl.: H04W 88/00

(54) **TRANSMISSION FORM DETERMINATION METHOD AND TERMINAL, AND BASE STATION**

(71) Applicant: Huawei Technologies Co., Ltd., Longgang District Shenzhen, Guangdong 518129 (CN)
(72) Inventor: LI, Yuanjie, Shenzhen Guangdong 518129 (CN)
(74) Representative: Epping - Hermann - Fischer
(86) International application number: PCT/CN2012/077997
(87) International publication number: WO 2014/000306

(57) **Abstract**

Embodiments of the present invention provide a method for determining a transmission form, a terminal and a base station. The embodiments of present invention acquire a CQI index by the terminal, and transmit the CQI index to the base station, wherein, there is a one-to-one correspondence between the CQI index and a transmission form, and the transmission form comprises: an aggregation level of a control channel; or, the aggregation level of the control channel and a modulation mode of the control channel, and the processing of the base station on the reported CSI is different from that in the prior art, which reduces the invalid processing of the base station, can avoid the problem that much invalid processing of the base station on the CSI processing of PDSCH in the prior art, or, the base station cannot use the reported CSI information about the PDSCH, and can improve the transmission performance of the system effectively.

## Description

### TECHNICAL FIELD

The present invention relates to the communication technology, and in particular, to a method for determining a transmission form, a terminal and a base station.

### BACKGROUND

In wireless communication systems such as a long term evolution (Long Term Evolution, LTE) system and a long term evolution advanced (Long Term Evolution Advanced, LTE-A) system, a terminal can report channel state information (Channel State Information, CSI) to an evolved NodeB (Evolved NodeB, eNB), so that the eNB can schedule a physical downlink shared channel (Physical Downlink Shared Channel, PDSCH) according to the reported CSI. Due to the introduction to technologies such as multi-user multiple input multiple output (Multiple Input Multiple Output, MIMO) and coordinated multiple points (Coordinated Multiple Points, CoMP) etc., a capacity of a control channel is limited, and thus an enhanced physical downlink control channel (Enhanced Physical Downlink Control Channel, ePDCCH) is introduced. The ePDCCH is transmitted in a region of transmitting a downlink data channel within one subframe, and is frequency divided with respect to the PDSCH.

However, since the CSI reported by the terminal is designed according to the transmission of the PDSCH, and the CSI of the PDSCH is different from the CSI of some control channels, such as the ePDCCH, there are much invalid processing of the base station on the CSI of the PDSCH, or, there is no CSI on these control channels in the reported CSI on the PDSCH, which results in that the base station cannot use the reported CSI information, and therefore the transmission performance of the system is decreased.

### SUMMARY

Some aspects of the present invention provide a method for determining a transmission form, a terminal and a base station, to reduce invalid processing, and improve transmission performance of a system.

One aspect of the present invention provides a method for determining a transmission form, including:
acquiring, by a terminal, a CQI index;
transmitting, by the terminal, the CQI index, to a base station; wherein, there is a one-to-one correspondence between the CQI index and a transmission form, and the transmission form includes: an aggregation level of a control channel; or, the aggregation level of the control channel and a modulation mode of the control channel.

Another embodiment of the present invention provides a method for determining a transmission form, including:
receiving, by a base station, a CQI index transmitted by a terminal;
determining a transmitting form corresponding to the CQI index, by the base station, according to a preset correspondence between the CQI index and a transmission form; the transmission form includes: an aggregation level of a control channel; or, the aggregation level of the control channel and a modulation mode of the control channel.

Another aspect of the present invention provides a terminal, including:
an acquiring unit, configured to acquire a CQI index; and
a transmitter, configured to transmit the CQI index to a base station; wherein, there is a one-to-one correspondence between the CQI index and a transmission form, and the transmission form includes: an aggregation level of a control channel; or, the aggregation level of the control channel and a modulation mode of the control channel.

Another embodiment of the present invention provides a base station, including:
a receiver, configured to receive a CQI index transmitted by a terminal;
a determining unit, configured to determine a transmission form corresponding to the CQI index, according to a preset correspondence between the CQI index and the transmission form; the transmission form includes: an aggregation level of a control channel; or, the aggregation level of the control channel and a modulation mode of the control channel.

According to the above technical solutions, embodiments of the present invention acquires the CQI index by the terminal, and transmits the CQI index to the base station, wherein, there is a one-to-one correspondence between the CQI index and a transmission form, and the transmission form includes: an aggregation level of a control channel; or, the aggregation level of the control channel and a modulation mode of the control channel, and the processing of the base station on the reported CSI is different from that in the prior art, which reduces the invalid processing of the base station, can avoid the problem that much invalid processing of the base station on the CSI processing of PDSCH in the prior art, or, the base station cannot use the reported CSI information about the PDSCH, and can improve the transmission performance of the system effectively.

### BRIEF DESCRIPTION OF DRAWINGS

To describe technical solutions in embodiments of the present invention or the prior art more clearly, the following briefly describes the accompanying drawings required in the description of embodiments or the prior art, apparently, the accompanying drawings illustrate only some embodiments of the present invention, and those ordinary skilled in the art can derive other drawings from these drawings without creative efforts.
FIG. 1 is a flowchart of a method for determining a transmission form according to an embodiment of the present invention;
FIG. 2 is a flowchart of a method for determining a transmission form according to another embodiment of the present invention;
FIG. 3 is a structural diagram of a terminal to another embodiment of the present invention; and
FIG. 4 is a structural diagram of a base station to another embodiment of the present invention.

### DESCRIPTION OF EMBODIMENTS

In order to make objects, technical solutions and advantages of embodiments of the present invention more clear, the technical solutions in the embodiments of the present invention are hereinafter described clearly and comprehensively with reference to the accompanying drawings in embodiments of the present invention, apparently, the embodiments described are part of the embodiments of the present invention, not all of the embodiments. All other embodiments derived by those ordinary skilled in the art on the basis of the embodiments herein without any creative effort fall within the protection scope of the present invention.

The technical solutions of the present invention can be applied to a wireless communication system, such as an LTE system or an LTE-A system and so on. A terminal therein can be a user equipment (User Equipment, UE) of the LTE system or the LTE-A system, and a base station therein can be an eNB of the LTE system or the LTE-A system.

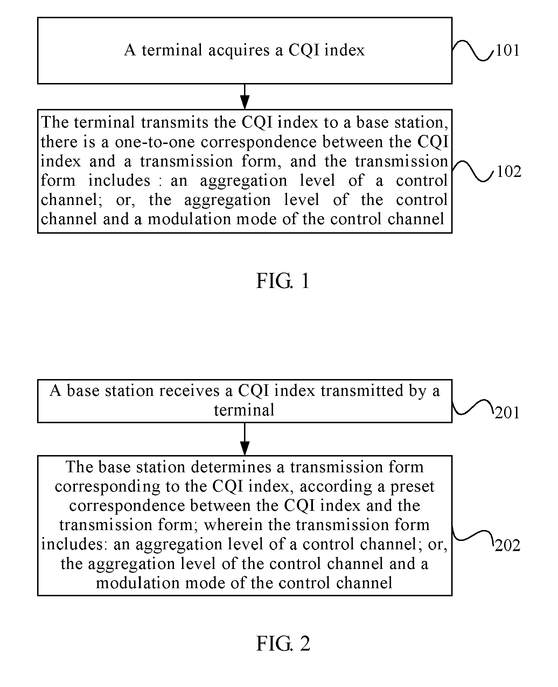

FIG. 1 is a flowchart of a method for determining a transmission form according to an embodiment of the present invention, as shown in FIG. 1.

101. a terminal acquires a channel quality indicator (Channel Quality Indicator, CQI) index.

Specifically, the terminal can acquire the CQI index by using a preset block error rate, wherein the block error rate does not exceed 0.01, that is 1%.

102. The terminal transmits the CQI index to a base station, wherein there is a one-to-one correspondence between the CQI index and a transmission form, and the transmission form includes an aggregation level of a control channel; or, the aggregation level of the control channel and a modulation mode of the control channel.

Wherein, the control channel can be a channel such as an ePDCCH and so on.

Optionally, in one possible implementation in the present embodiment, the modulation mode of the control channel is quadrature phase shift keying (Quadrature Phase Shift Keying QPSK) modulation mode; or, also can be the QPSK modulation mode and quadrature amplitude modulation (Quadrature Amplitude Modulation, QAM) with 16 kinds of symbols i.e., 16 QAM modulation mode.

Optionally, in one possible implementation in the present embodiment, the aggregation level of the control channel can include, but be not limited to, one of the followings or a combination of the followings: level 1, level 2, level 3, level 4, level 6, and level 8, for example, also can be level 5, level 7 and other aggregation level of the control channel.

Specifically, different aggregation levels of the control channel can correspond to different number of enhanced control channel element (Enhanced Control Channel Element, eCCE), for example, level 1 corresponds to one eCCE, level 2 corresponds to two eCCEs, level 3 corresponds to three eCCEs, level 4 corresponds to four eCCEs, level 6 corresponds to six eCCEs, level 8 corresponds to eight eCCEs, and so on.

Specifically, in one possible implementation in the present embodiment, the CQI can be 2 bits (bits) for indicating an aggregation level of the ePDCCH respectively, for example, 00 indicates level 1, 01 indicates level 2, 10 indicates level 4, and 11 indicates level 8, or other indication mode also can be used.

Specifically, in one possible implementation in the present embodiment, the CQI can be 3 bits (bits) for indicating a combination of an aggregation level of the ePDCCH and a modulation mode of the ePDCCH respectively, for example, 000 indicates level 1 and QPSK modulation mode, 001 indicates level 2 and QPSK modulation mode, 010 indicates level 4 and QPSK modulation mode, 011 indicates level 8 and QPSK modulation mode, 100 indicates level 1 and 16QAM modulation mode, 101 indicates level 2 and 16QAM modulation mode, 110 indicates level 4 and 16QAM modulation mode, and 111 indicates level 8 and 16QAM modulation mode, or other indication mode also can be used.

Optionally, in one possible implementation in the present embodiment, in 101, the terminal can acquire the CQI index by using CSI reference resource. Wherein, the CSI reference resource can have at least one of the following features:
the CSI reference resource does not carry PDCCH;
the first n orthogonal frequency division multiplexing (Orthogonal Frequency Division Multiplexing, OFDM) symbols of the CSI reference resource carry PDCCH, wherein, n is an integer being greater than or equal to 0, and the n is transmitted by the base station through a high level signaling and received by the terminal, or it also can be said that, n is a starting position of the OFDM symbol of the CSI reference resource that carries ePDCCH minus one;
the CSI reference resource does not carry common reference signal (Common Reference Signal, CRS);
a coding mode of the CSI reference resource is tail-biting convolution code; and
a transmission mode of the CSI reference resource is a transmit diversity mode, a random beam form, or a closed-loop precoding of which a rank is 1 (i.e., rank=1).

In the present embodiment, the terminal acquires the CQI index, and transmits the CQI index to the base station, wherein, there is a one-to-one correspondence between the CQI index and the transmission form, and the transmission form includes: an aggregation level of a control channel; or, the aggregation level of the control channel and a modulation mode of the control channel, and the processing of the base station on the reported CSI is different from that in the prior art, which reduces the invalid processing of the base station, can avoid the problem that much invalid processing of the base station on the CSI processing of PDSCH in the prior art, or, the base station cannot use the reported CSI information about the PDSCH, and can improve the transmission performance of the system effectively.

FIG. 2 is a flowchart of a method for determining a transmission form according to another embodiment of the present invention, as shown in FIG. 2.

201. a base station receives a CQI index transmitted by a terminal.

Specifically, the terminal can acquire the CQI index by using a preset block error rate, wherein the block error rate does not exceed 0.01, that is 1%.

202. The base station determines a transmission form corresponding to the CQI index, according a preset correspondence between the CQI index and the transmission form; wherein the transmission form includes: an aggregation level of a control channel; or, the aggregation level of the control channel and a modulation mode of the control channel.

Wherein, the control channel can be a channel such as an ePDCCH and so on.

Optionally, in one possible implementation in the present embodiment, the modulation mode of the control channel is QPSK modulation mode; or, also can be the QPSK modulation mode and 16 QAM modulation mode.

Optionally, in one possible way implementation in the present embodiment, the aggregation level of the control channel can include, but be not limited to, one of the followings or a combination of the followings: level 1, level 2, level 3, level 4, level 6, and level 8, for example, also can be level 5, level 7 and other aggregation level of the control channel.

Specifically, different aggregation levels of the control channel can correspond to different numbers of enhanced control channel element (Enhanced Control Channel Element, eCCE), for example, level 1 corresponds to one eCCE, level 2 corresponds to two eCCEs, level 3 corresponds to three eCCEs, level 4 corresponds to four eCCEs, level 6 corresponds to six eCCEs, level 8 corresponds to eight eCCEs, and so on.

Specifically, in one possible implementation in the present embodiment, the CQI can be 2 bits (bits) for indicating an aggregation level of the ePDCCH respectively, for example, 00 indicates level 1, 01 indicates level 2, 10 indicates level 4, and 11 indicates level 8, or other indication mode also can be used.

Specifically, in one possible implementation in the present embodiment, the CQI can be 3 bits (bits) for indicating a combination of an aggregation level of the ePDCCH and a modulation mode of the ePDCCH respectively, for example, 000 indicates level 1 and QPSK modulation mode, 001 indicates level 2 and QPSK modulation mode, 010 indicates level 4 and QPSK modulation mode, 011 indicates level 8 and QPSK modulation mode, 100 indicates level 1 and 16QAM modulation mode, 101 indicates level 2 and 16QAM modulation mode, 110 indicates level 4 and 16QAM modulation mode, and 111 indicates level 8 and 16QAM modulation mode, or other indication mode also can be used.

Optionally, in one possible implementation in the present embodiment, the terminal can acquire the CQI index by using CSI reference resource. Wherein, the CSI reference resource can have at least one of the following features:
the CSI reference resource does not carry PDCCH;
the first n orthogonal frequency division multiplexing (Orthogonal Frequency Division Multiplexing, OFDM) symbols of the CSI reference resource carry PDCCH, wherein, n is an integer being greater than or equal to 0, and the n is transmitted by the base station through a high level signaling and received by the terminal, or it also can be said that, n is a starting position of the OFDM symbol of the CSI reference resource that carries ePDCCH, minus one;
the CSI reference resource does not carry common reference signal (Common Reference Signal, CRS);
a coding mode of the CSI reference resource is tail biting convolution code; and
a transmission mode of the CSI reference resource is a transmit diversity mode, a random beam form, or a closed-loop precoding of which a rank is 1 (i.e., rank=1).

In the present embodiment, the base station receives the CQI index transmitted by the terminal, so that the base station can determine the transmission form corresponding to the CQI index according to a preset correspondence between the CQI index and the transmission form; wherein, the transmission form includes: an aggregation level of a control channel; or, the aggregation level of the control channel and a modulation mode of the control channel, and the processing of the base station on the reported CSI is different from that in the prior art, which reduces the invalid processing of the base station, can avoid the problem that much invalid processing of the base station on the CSI processing of PDSCH in the prior art, or, the base station cannot use the reported CSI information about the PDSCH, and can improve the transmission performance of the system effectively.

It is noted that, for a brief description, each preceding method embodiment is expressed as a series of action combinations, however, those skilled in the art should know that the present invention is not limited to the described action sequence, because according to the present invention, some steps can be executed by other sequence or executed simultaneously. Secondly, those skilled in the art should also know that, all the embodiments described in the description belong to preferred embodiments, and the involved actions and modules are not necessary for the present invention.

In the preceding embodiments, each embodiment is focused differently, and parts of a certain embodiment that are not described in detail can refer to relative descriptions of other embodiments.

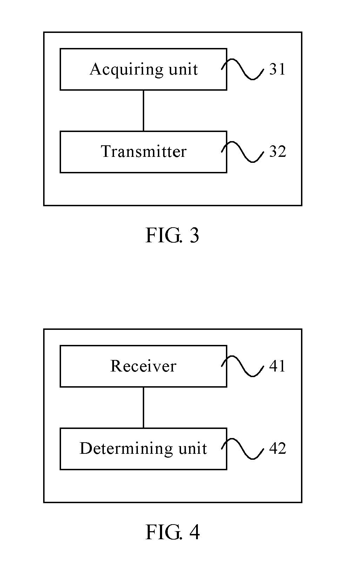

FIG. 3 is a structural diagram of a terminal to another embodiment of the present invention, as shown in FIG. 3, the terminal of the present embodiment can include an acquiring unit 31 and a transmitter 32. Wherein, the acquiring unit 31 is configured to acquire a CQI index; the transmitter 32 is configured to transmit the CQI index to a base station, wherein, there is a one-to-one correspondence between the CQI index and a transmission form, the transmission form includes an aggregation level of a control channel; or, the aggregation level of the control channel and a modulation mode of the control channel.

Specifically, the acquiring unit 31 can acquire the CQI index by using a preset block error rate, wherein the block error rate does not exceed 0.01, that is 1%.

Wherein, the control channel can be a channel such as an ePDCCH and so on.

Optionally, in one possible implementation in the present embodiment, the modulation mode of the control channel is QPSK modulation mode; or, the QPSK modulation mode and 16 QAM modulation mode.

Optionally, in one possible implementation in the present embodiment, the aggregation level of the control channel can include, but be not limited to, one of the followings or a combination of the followings: level 1, level 2, level 3, level 4, level 6, and level 8, for example, also can be level 5, level 7 and other aggregation level of the control channel.

Specifically, different aggregation levels of the control channel can correspond to different number of enhanced control channel element (Enhanced Control Channel Element, eCCE), for example, level 1 corresponds to one eCCE, level 2 corresponds to two eCCEs, level 3 corresponds to three eCCEs, level 4 corresponds to four eCCEs, level 6 corresponds to six eCCEs, level 8 corresponds to eight eCCEs, and so on.

Specifically, in one possible implementation in the present embodiment, the CQI can be 2 bits (bits) for indicating an aggregation level of the ePDCCH respectively, for example, 00 indicates level 1, 01 indicates level 2, 10 indicates level 4, and 11 indicates level 8, or other indication mode also can be used.

Specifically, in one possible implementation in the present embodiment, the CQI can be 3 bits (bits) for indicating a combination of an aggregation level of the ePDCCH and a modulation mode of the ePDCCH respectively, for example, 000 indicates level 1 and QPSK modulation mode, 001 indicates level 2 and QPSK modulation mode, 010 indicates level 4 and QPSK modulation mode, 011 indicates level 8 and QPSK modulation mode, 100 indicates level 1 and 16QAM modulation mode, 101 indicates level 2 and 16QAM modulation mode, 110 indicates level 4 and 16QAM modulation mode, and 111 indicates level 8 and 16QAM modulation mode, or other indication mode also can be used.

Optionally, in one possible implementation in the present embodiment, the acquiring unit 31 can specially acquire the CQI index by using CSI reference resource. Wherein, the CSI reference resource can have at least one of the following features:
the CSI reference resource does not carry PDCCH;
the first n OFDM symbols of the CSI reference resource carry PDCCH, wherein, n is an integer being greater than or equal to 0, and the n is transmitted by the base station through a high level signaling and received by the terminal;
the CSI reference resource does not carry CRS;
a coding mode of the CSI reference resource is tail biting convolution code; and
a transmission mode of the CSI reference resource is a transmit diversity mode, a random beam form, or a closed-loop precoding of rank=1.

In the present embodiment, the terminal acquires the CQI index by the acquiring unit, and transmits the CQI index to the base station by the transmitter, wherein, there is a one-to-one correspondence between the CQI index and the transmission form, and the transmission form includes: an aggregation level of a control channel; or, the aggregation level of the control channel and a modulation mode of the control channel, and the processing of the base station on the reported CSI is different from that in the prior art, which reduces the invalid processing of the base station, can avoid the problem that much invalid processing of the base station on the CSI processing of PDSCH in the prior art, or, the base station cannot use the reported CSI information about the PDSCH, and can improve the transmission performance of the system effectively.

FIG. 4 is a structural diagram of a base station to another embodiment of the present invention, as shown in FIG. 4, a base station of the present embodiment can include a receiver 41 and a determining unit 42. Wherein, the receiver 41 is configured to receive a CQI index transmitted by a terminal; the determining unit 42 is configured to determine a transmission form corresponding to the CQI index, according to a preset correspondence between the CQI index and the transmission form; the transmission form includes: an aggregation level of a control channel; or, the aggregation level of the control channel and a modulation mode of the control channel.

Specifically, the terminal can acquire the CQI index by using a preset block error rate, wherein the block error rate does not exceed 0.01, that is 1%.

Wherein, the control channel can be a channel such as an ePDCCH and so on.

Optionally, in one possible implementation in the present embodiment, the modulation mode of the control channel is QPSK modulation mode; or, also can be the QPSK modulation mode and 16 QAM modulation mode.

Optionally, in one possible way implementation in the present embodiment, the aggregation level of the control channel can include, but be not limited to, one of the followings or a combination of the followings: level 1, level 2, level 3, level 4, level 6, and level 8, for example, also can be level 5, level 7 and other aggregation level of the control channel.

Specifically, different aggregation levels of the control channel can correspond to different number of enhanced control channel element (Enhanced Control Channel Element, eCCE), for example, level 1 corresponds to one eCCE, level 2 corresponds to two eCCEs, level 3 corresponds to three eCCEs, level 4 corresponds to four eCCEs, level 6 corresponds to six eCCEs, level 8 corresponds to eight eCCEs, and so on.

Specifically, in one possible implementation in the present embodiment, the CQI can be 2 bits (bits) for indicating an aggregation level of the ePDCCH respectively, for example, 00 indicates level 1, 01 indicates level 2, 10 indicates level 4, and 11 indicates level 8, or other indication mode also can be used.

Specifically, in one possible implementation in the present embodiment, the CQI can be 3 bits (bits) for indicating a combination of an aggregation level of the ePDCCH and a modulation mode of the ePDCCH respectively, for example, 000 indicates level 1 and QPSK modulation mode, 001 indicates level 2 and QPSK modulation mode, 010 indicates level 4 and QPSK modulation mode, 011 indicates level 8 and QPSK modulation mode, 100 indicates level 1 and 16QAM modulation mode, 101 indicates level 2 and 16QAM modulation mode, 110 indicates level 4 and 16QAM modulation mode, and 111 indicates level 8 and 16QAM modulation mode, or other indication mode also can be used.

Optionally, in one possible implementation in the present embodiment, the terminal can acquire the CQI index by using CSI reference resource. Wherein, the CSI reference resource can have at least one of the following features:
the CSI reference resource does not carry PDCCH;
the first n orthogonal frequency division multiplexing (Orthogonal Frequency Division Multiplexing, OFDM) symbols of the CSI reference resource carry PDCCH, wherein, n is an integer being greater than or equal to 0, and the n is transmitted by the base station through a high level signaling and received by the terminal, or it also can be said that, n is a starting position of the OFDM symbol of the CSI reference resource that carries ePDCCH minus one;
the CSI reference resource does not carry common reference signal (Common Reference Signal, CRS);
a coding mode of the CSI reference resource is tail biting convolution code; and
a transmission mode of the CSI reference resource is a transmit diversity mode, a random beam form, or a closed-loop precoding of which a rank is 1 (i.e., rank=1).

In the present embodiment, by the receiver, the base station receives the CQI index transmitted by the terminal, so that the determining unit can determine the transmission form corresponding to the CQI index according to a preset correspondence between the CQI index and the transmission form; wherein, the transmission form includes: an aggregation level of a control channel; or, the aggregation level of the control channel and a modulation mode of the control channel, and the processing of the base station on the reported CSI is different from that in the prior art, which reduces the invalid processing of the base station, can avoid the problem that a lot of invalid processing of the base station on the CSI processing of PDSCH in the prior art, or, the base station cannot use the reported CSI information about the PDSCH, and can improve the transmission performance of the system effectively.

It can be known clearly by those skilled in the art that, in order to describe conveniently and briefly, the specific work process of the system, the apparatus and the unit described above can be referred to the corresponding process of the aforementioned method embodiments, which will not be repeated here.

In these embodiments provided in the present invention, it should be understood that the disclosed system, apparatus and method can be achieved in other ways. For example, the above-described apparatus embodiments are merely exemplary, for example, the division of the unit is only a logic function division, there can be other dividing ways in actual implementations, for example, a plurality of units or components can be combined or can be integrated into another system, or some of the features can be ignored, or not executed. Another point, mutual coupling or direct coupling or communication connection which is shown or discussed can be via some interfaces, indirect coupling or communication connection of the equipment or unit can be electrical, mechanical, or in other forms.

The unit described as a separate component may be or may not be physically separated, the component shown as a unit may be or may not be a physical unit, which can be located in one place, or can be distributed to a plurality of network units. All or part of the units thereof can be selected according to the actual needs to achieve the purpose of the embodiment solution.

Furthermore, each functional unit in each embodiment of the present invention can be integrated in one processing unit, or can exist separately and physically, and it also can be that two or more units are integrated in one unit. The above integrated units can be achieved in the form of hardware, or in the form of hardware plus software functional units.

The integrated units achieved in the form of software functional unit can be stored in a computer readable storage medium. The software functional unit is stored in a storage medium, and includes a number of instructions, so that a computer equipment (e.g., a personal computer, a server, a network equipment, and the like) can execute part of steps of the method described in various embodiments of the present invention. The storage medium includes: USB disk, mobile hard disk, read-only memory (Read-Only Memory, ROM), random access memory (Random Access Memory, RAM), magnetic disk or optical disk, and other medium capable of storing program codes.

Finally, it should be noted that the above embodiments are merely provided for describing the technical solutions of the present invention, but not intended to limit the present invention. It should be understood by persons skilled in the art that although the present invention has been described in detail with reference to the foregoing embodiments, modifications can be made to the technical solutions described in the foregoing embodiments, or equivalent replacements can be made to some technical features in the technical solutions; however, such modifications or replacements do not cause the essence of corresponding technical solutions to depart from the spirit and scope of the technical solutions of the embodiments of the present invention.

## Claims

1. A method for determining a transmission form, **characterized by** comprising:
acquiring, by a terminal, a channel quality indicator CQI index;
transmitting, by the terminal, the CQI index, to a base station, wherein, there is a one-to-one correspondence between the CQI index and a transmission form, the transmission form comprises: an aggregation level of a control channel; or, the aggregation level of the control channel and a modulation mode of the control channel.

2. The method according to claim 1, wherein the modulation mode of the control channel is quadrature phase shift keying QPSK modulation mode; or, the QPSK modulation method and quadrature amplitude modulation with 16 kinds of symbols 16 QAM modulation mode.

3. The method according to claim 1 or 2, wherein the aggregation level of the control channel comprises one of the followings or a combination of the followings:
level 1, level 2, level 3, level 4, level 6, and level 8.

4. The method according to any one of claims 1 to 3, wherein the acquiring, by a terminal, the CQI index, comprising:
acquiring the CQI index, by the terminal, using channel state information CSI reference resource;
wherein, the CSI reference resource has at least one of the following features:
the CSI reference resource does not carry physical downlink control channel PDCCH;
the first n orthogonal frequency division multiplexing OFDM symbols of the CSI reference resource carry PDCCH, wherein, n is an integer being greater than or equal to 0, and the n is transmitted by the base station through a high level signaling and received by the terminal;
the CSI reference resource does not carry common reference signal CRS;
coding mode of the CSI reference resource is tail biting convolution code; and
the transmitting mode of the CSI reference resource is a transmit diversity mode, a random beam form, or a closed-loop precoding of rank=1.

5. A method for determining a transmission form, **characterized by** comprising:
receiving, by a base station, a channel quality indicator CQI index transmitted by a terminal;
determining a transmitting form corresponding to the CQI index, by the base station, according to a preset correspondence between the CQI index and the transmission form; the transmission form includes: an aggregation level of a control channel; or, the aggregation level of the control channel and a modulation mode of the control channel.

6. The method according to claim 5, wherein the modulation mode of the control channel is quadrature phase shift keying QPSK modulation mode; or, the QPSK modulation mode and quadrature amplitude modulation with 16 kinds of symbols 16 QAM modulation mode.

7. The method according to claim 5 or 6, wherein the aggregation level of the control channel comprises one of the followings or a combination of the followings:
level 1, level 2, level 3, level 4, level 6, and level 8.

8. A terminal, **characterized by** comprising:
an acquiring unit, configured to acquire a channel quality indicator CQI index; and
a transmitter, configured to transmit the CQI index to a base station, wherein, there is a one-to-one correspondence between the CQI index and a transmission form, the transmission form comprises: an aggregation level of a control channel; or, the aggregation level of the control channel and a modulation mode of the control channel.

9. The terminal according to claim 8, wherein the modulation mode of the control channel is quadrature phase shift keying QPSK modulation mode; or, the QPSK modulation mode and quadrature amplitude modulation with 16 kinds of symbols 16 QAM modulation mode.

10. The terminal according to claim 8 or 9, wherein the aggregation level of the control channel comprises one or more of the followings:
level 1, level 2, level 3, level 4, level 6, and level 8.

11. The terminal according to any one of claims 8 to 10, wherein the acquiring unit is configured specifically to:
acquire the CQI index, using channel state information CSI reference resource;
wherein, the CSI reference resource has at least one of the following features:
the CSI reference resource does not carry physical downlink control channel PDCCH;
the first n orthogonal frequency division multiplexing OFDM symbols of the CSI reference resource carry PDCCH, wherein, n is an integer being greater than or equal to 0, and the n is transmitted by the base station through a high level signaling and received by the terminal;
the CSI reference resource does not carry common reference signal CRS;
a coding mode of the CSI reference resource is tail biting convolution code; and
a transmission mode of the CSI reference resource is a transmit diversity mode, a random beam form, or a closed-loop precoding of rank=1.

12. A base station, **characterized by** comprising:
a receiver, configured to receive a channel quality indicator CQI index transmitted by a terminal;
a determining unit, configured to determine a transmission form corresponding to the CQI index, according to a preset correspondence between the CQI index and the transmission form; the transmission form comprises: an aggregation level of a control channel; or, the aggregation level of the control channel and a modulation mode of the control channel.

13. The base station according to claim 12, wherein the modulation mode of the control channel is quadrature phase shift keying QPSK modulation mode; or, the QPSK modulation mode and quadrature amplitude modulation with 16 kinds of symbols 16 QAM modulation mode.

14. The base station according to claim 12 or 13, wherein the aggregation level of the control channel comprises one or more of the followings:
level 1, level 2, level 3, level 4, level 6, and level 8.
